# EUROPEAN PATENT APPLICATION

(11) **EP 2 500 908 A1**
(43) Date of publication of application: **19.09.2012**
(21) Application number: 10829777.1
(22) Date of filing: 14.09.2010
(51) Int. Cl.: G21C 15/18, G21C 9/00, G21C 13/00, G21C 13/024

(54) **EMERGENCY REACTOR CORE COOLING DEVICE AND NUCLEAR REACTOR FACILITY**

(30) Priority: 12.11.2009 JP 2009258803
(71) Applicant: Mitsubishi Heavy Industries, Ltd., Tokyo 108-8215 (JP)
(72) Inventor: NAITO, Takashi, Teoyo 108-8215 (JP); SUZUTA, Tadahiko, Tokyo 108-8216 (JP); SANO, Hiroshi, Tokyo 108-8215 (JP); UDAGAWA, Hidekazu, Tokyo 108-8215 (JP)
(74) Representative: HOFFMANN EITLE
(86) International application number: PCT/JP2010/065865
(87) International publication number: WO 2011/058817

(57) **Abstract**

As shown in Fig.1, a pressurized water reactor (12) is configured to be arranged within a reactor containment vessel (11), and a cooling-water circulation path (51) that supplies primary cooling water to the reactor containment vessel (11) or the pressurized water reactor (12) and collects and circulates the primary cooling water during an emergency, and a cooling device (52) that air-cools primary cooling water flowing in the cooling-water circulation path (51) at outside of the reactor containment vessel (11) are provided, thereby making it possible to realize downsizing and cost reduction of emergency core cooling system and to improve safety and reliability thereof.

## Description

### TECHNICAL FIELD

The present invention relates to an emergency core cooling system that supplies cooling water to a reactor or a reactor containment vessel thereof to cool the reactor or the reactor containment vessel when a loss of coolant accident occurs, where a pipe for circulating primary cooling water to the reactor is damaged, and relates to a reactor facility having the emergency core cooling system installed therein.

### BACKGROUND ART

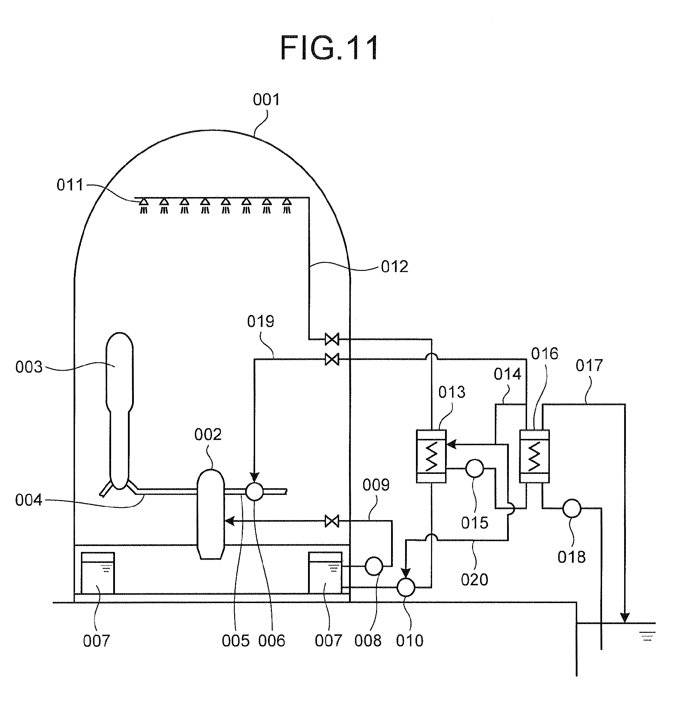

FIG. 11 is an overall configuration diagram of a reactor cooling system including a conventional emergency core cooling system. As shown in FIG. 11, in a conventional reactor facility, a pressurized water reactor 002 and a steam generator 003 are stored in a reactor containment vessel 001, the pressurized water reactor 002 is connected to the steam generator 003 via cooling water pipes 004 and 005, and a reactor coolant pump 006 enables the circulation of primary cooling water.

In a conventional reactor cooling system, a refueling water storage pit 007 is provided within the reactor containment vessel 001. A reactor cooling path 009 is provided, through which a pump 008 is driven to supply cooling water stored in this refueling water storage pit 007 to the pressurized water reactor 002 in an emergency. In addition, a reactor-containment-vessel cooling path 012 is provided, through which a pump 010 is driven to spray the cooling water over the reactor containment vessel 001 by the use of injection nozzles 011 in an emergency.

Further, a heat exchanger 013 is provided on the reactor-containment-vessel cooling path 012, and a secondary cooling-water circulation path 014 and a pump 015 are provided for circulating secondary cooling water to this heat exchanger 013 and cooling primary cooling water. Furthermore, a heat exchanger 016 is provided on the secondary cooling-water circulation path 014, and a seawater once-through path 017 and a pump 018 are provided for supplying seawater through this heat exchanger 016 and to cool the secondary cooling water. Moreover, branching from the secondary cooling-water circulation path 014, component cooling paths 019 and 020 are provided for supplying the secondary cooling water to components such as the reactor coolant pump 006 provided within the reactor containment vessel 001 or components such as the pump 010 provided outside of the reactor containment vessel 001 and cooling the component.

Therefore, when the reactor facility operates normally, the pump 015 is driven to supply secondary cooling water to the components (the pumps 006 and 010) through the component cooling paths 019 and 020 and to cool the components. In addition, the pump 018 is driven to supply the seawater to the heat exchange 016 through the seawater once-through path 017, thereby cooling the secondary cooling water that circulates in the secondary cooling-water circulation path 014.

On the other hand, when the reactor facility operates in an emergency, the pump 008 is driven to supply primary cooling water in the refueling water storage pit 007 to the pressurized water reactor 002 through the reactor cooling path 009 and to cool the pressurized water reactor 002. In addition, the pump 010 is driven to supply the primary cooling water to the injection nozzles 011 through the reactor-containment-vessel cooling path 012 and to spray the primary cooling water over the reactor containment vessel 001 and supply the primary cooling water to the reactor containment vessel 001. At this time, similarly to normal operations, the secondary cooling water is circulated to the heat exchanger 013 and the heat exchanger 013 cools the primary cooling water, and the seawater is supplied through the heat exchanger 016 and the heat exchanger 016 cools the secondary cooling water.

For example, such a reactor cooling system in a reactor facility is described in Patent Literature 1 and Non Patent Literature 1 mentioned below.

### Citation List

### Patent Literature

Patent Literature 1: Japanese Patent Publication No. H07-015506

### Non Patent Literature

Non Patent Literature 1: "Overview of Light Water Nuclear Power Stations" (Revised Edition), Published in October 1992, P182 to P197

### SUMMARY

### TECHNICAL PROBLEMS

The reactor cooling system in the conventional reactor facility described above functions as both a cooling system actuated during normal operation and a cooling system actuated during an emergency. Therefore, when a trouble concurrent with a loss of coolant accident occurs to the reactor cooling system during normal operation, the reactor cooling system cannot be actuated during an emergency operation. Generally, therefore, reactor cooling systems of this type are provided redundantly. This causes problems that the facility becomes large in scale and facility cost and maintenance cost increase.

The present invention has been achieved to solve the above problems, and object of the present invention is to provide an emergency core cooling system and a reactor facility that can realize downsizing and cost reduction of the system and that can improve safety and reliability thereof.

### MEANS FOR SOLVING PROBLEMS

According to an aspect of the present invention, an emergency core cooling system in a reactor facility having a reactor arranged within a reactor containment vessel, includes: a cooling-water circulation path that supplies cooling water to the reactor containment vessel or the reactor and collects and circulates the cooling water in an emergency; and a cooling device that air-cools cooling water flowing in the cooling-water circulation path at outside of the reactor containment vessel.

In the emergency core cooling system of the present invention, a building is placed outside of the reactor containment vessel, the cooling-water circulation path includes an external path entering into the building from within the reactor containment vessel and returning again into the reactor containment vessel, and the cooling device air-cools cooling water flowing in the external path.

In the emergency core cooling system of the present invention, plural sets of the cooling-water circulation paths and the cooling devices are arranged within the building.

In the emergency core cooling system of the present invention, the cooling-water circulation path includes a spray path that sprays cooling water stored in a refueling water storage pit provided within the reactor containment vessel into the reactor containment vessel, a supply path that supplies the cooling water stored in the refueling water storage pit into the reactor, and a collection path that collects cooling water sprayed into the reactor containment vessel and cooling water supplied into the reactor in the refueling water storage pit.

In the emergency core cooling system of the present invention, a duct that extends into the building along a vertical direction and that includes a building-lower-portion suction port and a building-upper-portion discharge port is provided, and the cooling device is provided in the duct.

In the emergency core cooling system of the present invention, the cooling device includes a plurality of fine tubes that branch from the cooling-water circulation path and that are arranged to cross inside of the duct.

In the emergency core cooling system of the present invention, the cooling device includes an inlet header where cooling water enters from the cooling-water circulation path, an outlet header that ejects cooling water to the cooling-water circulation path, and a plurality of the fine tubes that connect the inlet header to the outlet header so as to form the headers into a ring shape, the building-lower-portion suction port communicates with one of a space surrounded by the inlet header, the outlet header, and the fine tubes and a space outside of the fine tubes, and a discharge port of the duct provided in an upper portion of the building communicates with the space other than the space with which the building-lower-portion suction port communicates.

In the emergency core cooling system of the present invention, a fan that blows air that is sucked from the building-lower-portion suction port, that rises in the duct, and that has cooled cooling water flowing in the fine tubes toward the building-upper-portion discharge port is provided.

In the emergency core cooling system of the present invention, a lower base plate is placed on a ground, an upper base plate is arranged on the lower base plate via a seismic isolator, the reactor containment vessel and the building are placed on the upper base plate, and the building-lower-portion suction port provided near a ground surface communicates with the duct via a space in which the seismic isolator is arranged.

In the emergency core cooling system of the present invention, the building-lower-portion suction port is provided between the upper base plate and the lower base plate or between the building and the lower base plate.

In the emergency core cooling system of the present invention, the building is placed to surround the reactor containment vessel, and a plurality of the ducts are provided in outer circumferential portions of the building to be distributed equidistantly in a circumferential direction.

According to another aspect of the present invention, a reactor facility includes: a reactor containment vessel; a reactor arranged within the reactor containment vessel; components; component cooling path that circulates cooling water in the components and cools the components during a normal operation; a normal-operation cooling device that water-cools cooling water flowing in the component cooling path outside of the reactor containment vessel; a reactor cooling path that circulates primary cooling water in the reactor containment vessel or the reactor and cools the reactor containment vessel or the reactor in an emergency; and an emergency cooling device that air-cools primary cooling water flowing in the reactor cooling path at outside of the reactor containment vessel.

### ADVANTAGEOUS EFFECTS OF INVENTION

In the invented emergency core cooling system includes the cooling-water circulation path that supplies cooling water to the reactor containment vessel or the pressurized water reactor and collects and circulates the cooling water in an emergency, and the cooling device that air-cools the cooling water flowing in the cooling-water circulation path at outside of the reactor containment vessel. Therefore, the cooling device that cools the cooling water supplied to the reactor containment vessel or the pressurized water reactor is provided outside of the reactor containment vessel and configured as an air-cooling type, whereby it is possible to realize downsizing and cost reduction of the system and improve safety and reliability thereof.

In the invented emergency core cooling system, the building is placed outside of the reactor containment vessel, the external path entering into the building from within the reactor containment vessel and returning again into the reactor containment vessel is provided as the cooling-water circulation path, and the cooling device air-cools cooling water flowing in this external path. Therefore, the cooling device air-cools the cooling water flowing in the cooling-water circulation path at outside of the reactor containment vessel, thereby making it possible to efficiently cool the cooling water.

In the invented emergency core cooling system, the redundant cooling-water circulation paths and the cooling devices are arranged within the building. Therefore, when one of the cooling-water circulation paths or the cooling devices breaks down or is in a maintenance operation, the other cooling-water circulation paths and cooling devices can be actuated, thereby making it possible to improve the safety of the system.

In the invented emergency core cooling system, the spray path that sprays cooling water stored in the refueling water storage pit provided within the reactor containment vessel into the reactor containment vessel, the supply path that supplies the cooling water stored in the refueling water storage pit into the pressurized water reactor, and the collection path that collects the cooling water sprayed into the reactor containment vessel and the cooling water supplied into the pressurized water reactor in the refueling water storage pit are provided as each of the cooling-water circulation paths. Therefore, it is possible to select the spray of the cooling water into the reactor containment vessel, the supply of the cooling water into the pressurized water reactor, or both the spray and the supply of the cooling water, depending on a state of an accident that occurs to the reactor facility. It is possible to improve the safety of the system.

In the invented emergency core cooling system, the duct that extends into the building along the vertical direction and that includes the building-lower-portion suction port and the building-upper-portion discharge port is provided, and each of the cooling devices is provided in the duct. Therefore, air flowing from the building-lower-portion suction port in the duct is supplied toward the cooling device, and the air that becomes hot after being exchanged heat with cooling water in the cooling device is discharged outside from the building-upper-portion discharge port. It is possible to efficiently cool the cooling water by the use of air.

In the invented emergency core cooling system, a plurality of fine tubes that branch from the cooling-waster circulation path and that are arranged to cross the inside of the duct are provided as each of the cooling devices. Therefore, heat exchange is made between the air flowing in the duct and cooling water flowing in each of the fine tubes, and it is possible to efficiently cool the cooling water by the use of air.

In the invented emergency core cooling system, the inlet header where cooling water enters from the cooling-water circulation path, the outlet header that ejects cooling water to the cooling-water circulation path, and a plurality of fine tubes that connect the inlet header to the outlet header so as to form the headers into a ring shape are provided as each of the cooling devices. The suction port of the duct provided in a lower portion of the building communicates with the fine tubes, and the upper discharge port of the duct communicates with the space surrounded by the inlet header, the outlet header, and the fine tubes. Therefore, air is supplied to the fine tubes formed into the ring shape from outside of the fine tubes, and the air of the internal space that has been exchanged heat is discharged upward. The heat exchange efficiency is improved by efficiently arranging the fine tubes, thereby making it possible to downsize the cooling device.

In the invented emergency core cooling system, the fan that blows air that is sucked from the building-lower-portion suction port, that rises in the duct, and that has cooled cooling water flowing in the fine tubes toward the building-upper-portion discharge port is provided. Therefore, an air current generated by driving the fan discharges the air that has been exchanged heat with the cooling water flowing in the fine tubes upward or downward from the internal space, thereby making it possible to improve the heat exchange efficiency.

In the invented emergency core cooling system, the lower base plate is placed on the ground, the upper base plate is provided on the lower base plate via the seismic isolator, the reactor containment vessel and the building are placed on the upper base plate, and the building-lower-portion suction port provided near a ground surface communicates with the duct via the space in which the seismic isolator is arranged. Therefore, air near the ground surface is introduced into the space that accommodates the seismic isolator from the building-lower-portion suction port and supplied from the space via the duct. It is thereby possible to supply lower-temperature air to the cooling device via the space that accommodates the seismic isolator and improve the cooling. In addition, the cooling device is not directly exposed to the outside and shielding characteristics can be improved.

In the invented emergency core cooling system, the building-lower-portion suction port is provided between the upper base plate and the lower base plate or between the building and the lower base plate. Therefore, there is no need to additionally provide a suction port in the building or the like, making it possible to simplify the configuration of the emergency core cooling system.

In the invented emergency core cooling system, the building is placed to surround the reactor containment vessel, and a plurality of the ducts are provided in outer circumferential portions of the building to be distributed equidistantly in a circumferential direction. Therefore, it is possible to ensure sufficient safety of the system from damage, breakdown or the like by providing a plurality of cooling devices and a plurality of ducts while being physically separated from one another in the circumferential direction.

Moreover, the reactor facility according to the present invention includes the component cooling path that circulates cooling water through the component and cools the component during a normal operation, the normal-operation cooling device that water-cools the cooling water flowing in the component cooling path outside of the reactor containment vessel, the reactor cooling path that circulates primary cooling water in the reactor containment vessel or the reactor and cools the reactor containment vessel or the reactor in an emergency, and the emergency cooling device that air-cools the primary cooling water flowing in the reactor cooling path at outside of the reactor containment vessel. Therefore, it is possible to improve the safety and reliability of the system by separately providing the normal-operation cooling system and the emergency cooling system. It is also possible to realize the downsizing and cost reduction of the system by using the air-cooling system as the emergency cooling system.

### BRIEF DESCRIPTION OF DRAWINGS

FIG. 1 is an overall configuration diagram of a reactor cooling system including an emergency core cooling system according to a first embodiment of the present invention.
FIG. 2 is a schematic configuration diagram of a reactor facility having the emergency core cooling system according to the first embodiment installed therein.
FIG. 3 is a schematic diagram of air ducts in a cooling device for primary cooling water.
FIG. 4 is a schematic diagram of the cooling device for primary cooling water.
FIG. 5 is a plan view of the cooling device for primary cooling water.
FIG. 6 is a cross-sectional view taken along VI-VI of FIG. 5, representing a longitudinal cross section of the cooling device for primary cooling water.
FIG. 7 is a schematic configuration diagram of a nuclear power plant including the emergency core cooling system according to the first embodiment.
FIG. 8 is a schematic configuration diagram of a reactor facility including an emergency core cooling system according to a second embodiment of the present invention.
FIG. 9 is a partial cutaway schematic plan view of the reactor facility according to the second embodiment.
FIG. 10 is a cross-sectional view taken along X-X of FIG. 9, representing a duct in which a cooling device is arranged.
FIG. 11 is an overall configuration diagram of a reactor cooling system including a conventional emergency core cooling system.

### DESCRIPTION OF EMBODIMENTS

Exemplary embodiments of an emergency core cooling system and a reactor facility according to the present invention will be explained below in detail with reference to the accompanying drawings. The present invention is not limited to the embodiments.

### First embodiment

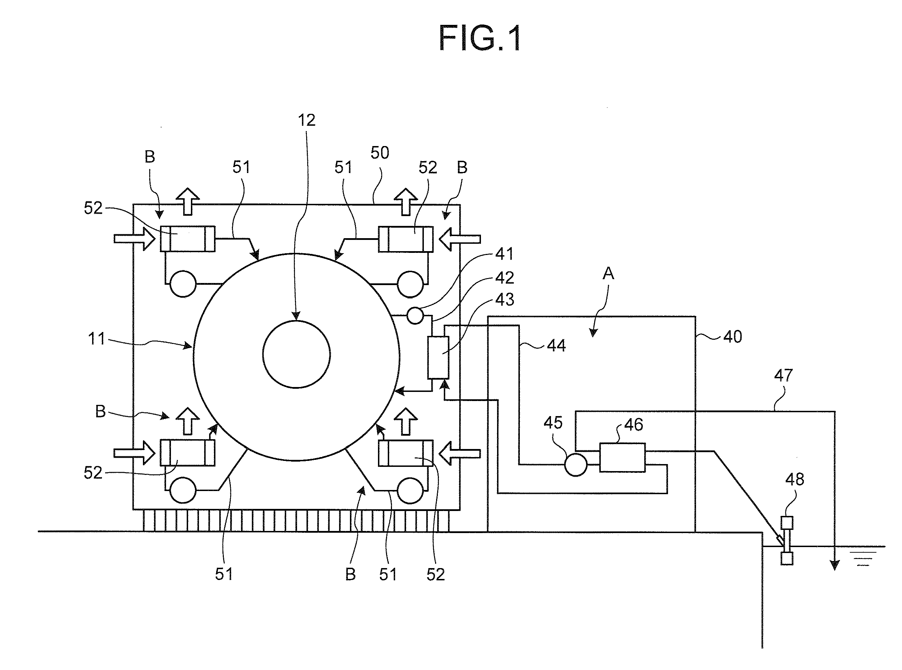

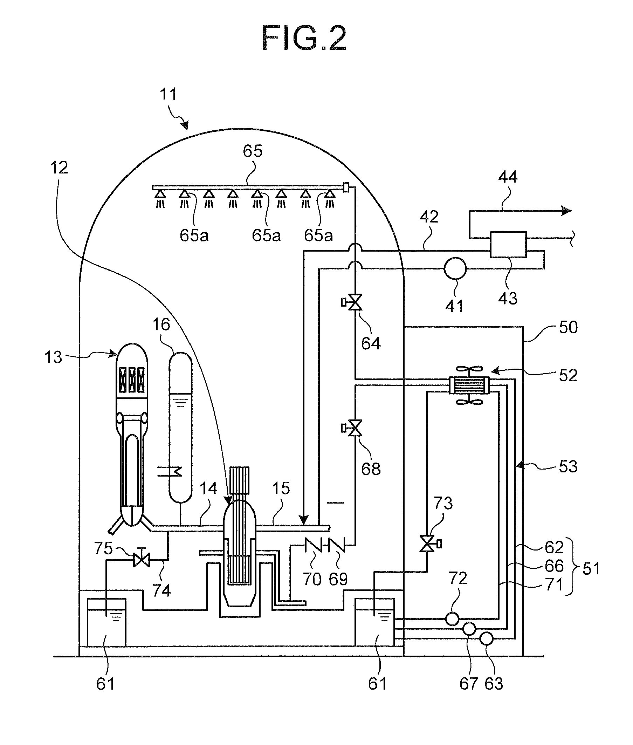

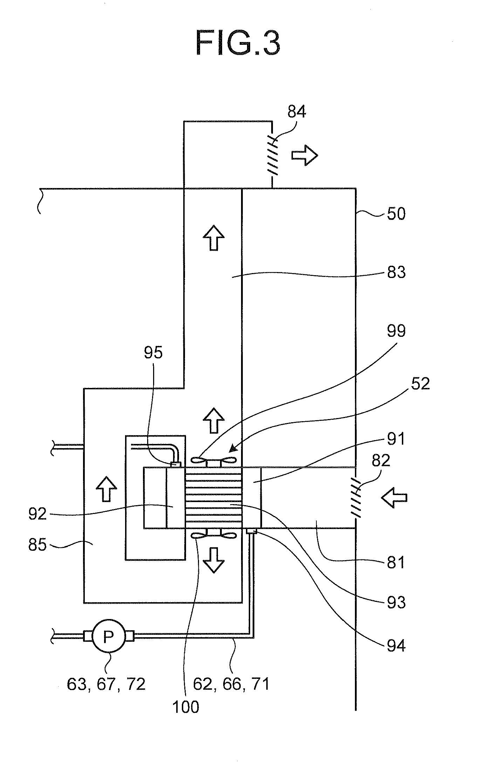

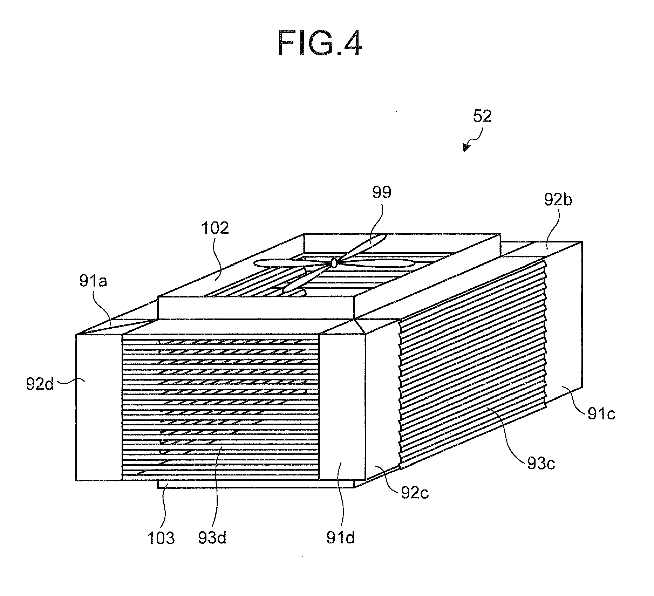

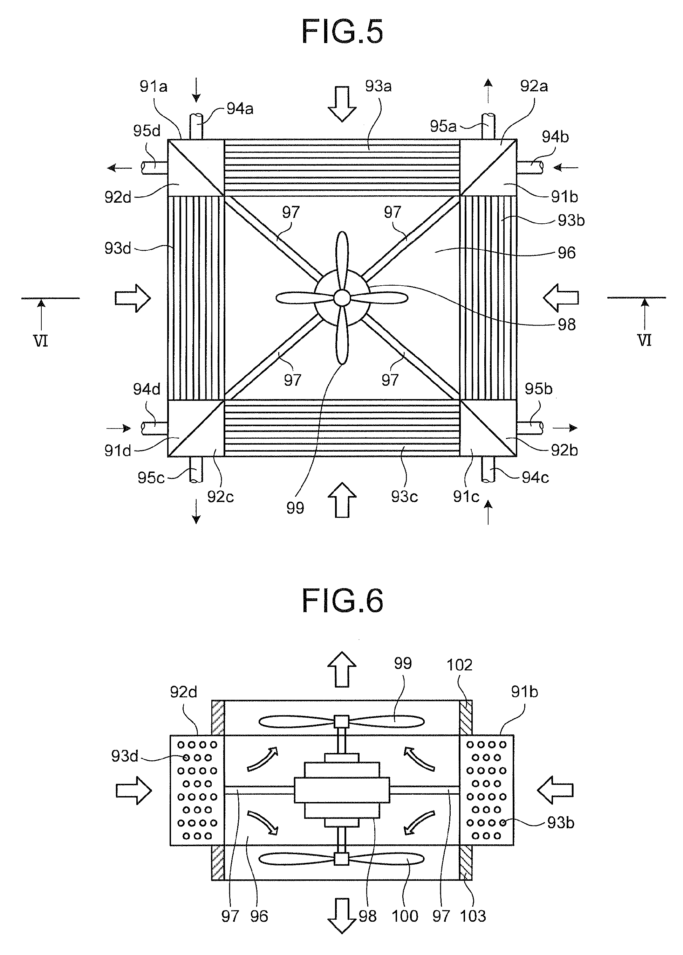

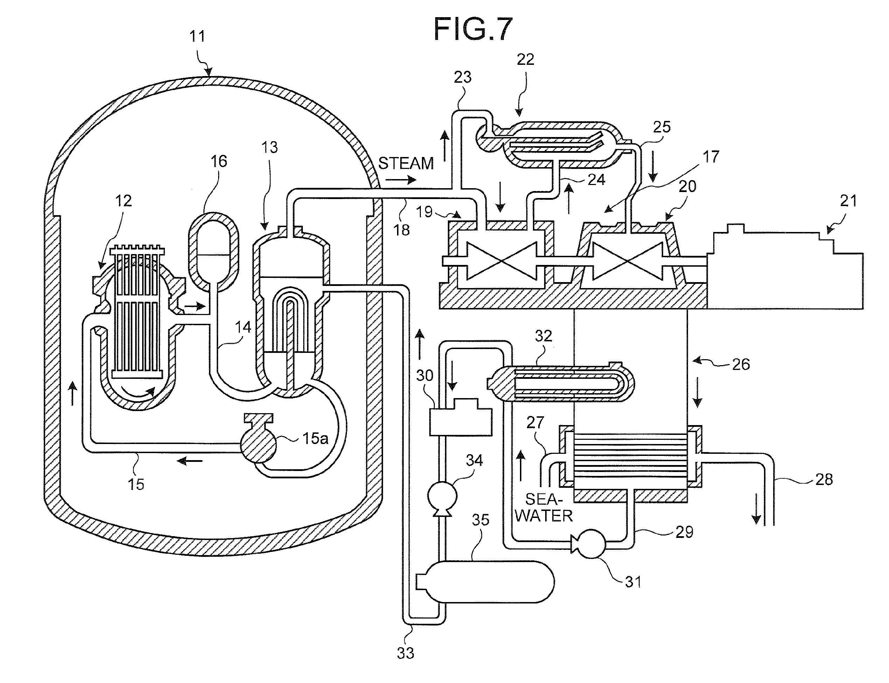

FIG. 1 is an overall configuration diagram of a reactor cooling system including an emergency core cooling system according to a first embodiment of the present invention. FIG. 2 is a schematic configuration diagram of a reactor facility having the emergency core cooling system according to the first embodiment installed therein. FIG. 3 is a schematic diagram of air ducts in a cooling device for primary cooling water. FIG. 4 is a schematic diagram of the cooling device for primary cooling water. FIG. 5 is a plan view of the cooling device for primary cooling water. FIG. 6 is a cross-sectional view taken along VI-VI of FIG. 5, representing a longitudinal cross section of the cooling device for primary cooling water. FIG. 7 is a schematic configuration diagram of a nuclear power plant including the emergency core cooling system according to the first embodiment.

A reactor according to the first embodiment is a pressurized water reactor (PWR) that uses light water as a reactor coolant and a neutron moderator, keeps non-boiled high-temperature and high-pressure water throughout a core, supplies the high-temperature and high-pressure water to a steam generator to generate steam by heat exchange, and supplies this steam to a turbine generator to generate electrical power.

As shown in FIG. 7, in the nuclear power plant including the pressurized water reactor according to the first embodiment, a pressurized water reactor 12 and a steam generator 13 are stored in a reactor containment vessel 11, the pressurized water reactor 12 is connected to the steam generator 13 via cooling water pipes 14 and 15, a pressurizer 16 is provided on the cooling water pipe 14, and a reactor coolant pump 15a is provided on the cooling water pipe 15. In this case, light water is used as a moderator and primary cooling water (a coolant), and the pressurizer 16 controls a pressure of a primary cooling system to be kept in a high pressure state of about 150 to 160 atmospheric pressure so as to suppress the primary cooling water from boiling in the core. Therefore, low-enriched uranium or MOX that serves as fuel (atomic fuel) heats the light water that serves as the primary cooling water in the pressurized water reactor 12, and high-temperature primary cooling water is transferred to the steam generator 13 via the cooling water pipe 14 in a state where the pressurizer 16 keeps the high-temperature primary cooling water at a predetermined pressure. In this steam generator 13, heat exchange is made between the high-pressure and high-temperature primary cooling water and secondary cooling water. The cooled primary cooling water is returned to the pressurized water reactor 12 via the cooling water pipe 15.

The steam generator 13 is connected to a steam turbine 17 via a main steam pipe 18. This steam turbine 17 includes a high-pressure turbine 19 and a low-pressure turbine 20, and an electric generator 21 is connected to the steam turbine 17. Furthermore, a moisture separator heater 22 is provided between the high-pressure turbine 19 and the low-pressure turbine 20. A steam branch pipe 23 that branches from the main steam pipe 18 is connected to the moisture separator heater 22 whereas the high-pressure turbine 19 is connected to the moisture separator heater 22 by a low-temperature reheating pipe 24 and the moisture separator heater 22 is connected to the low-pressure turbine 20 by a high-temperature reheating pipe 25. Further, the low-pressure turbine 20 of the steam turbine 17 includes a condenser 26, and an intake pipe 27 and a drain pipe 28 for feeding and discharging cooling water (seawater, for example) are connected to this condenser 26. This condenser 26 is connected to a deaerator 30 via a condensed water pipe 29, and a condensate pump 31 and a low-pressure feedwater heater 32 are provided on the condensed water pipe 29. In addition, the deaerator 30 is connected to the steam generator 13 via a main feedwater pipe 33, and a feedwater pump 34 and a high-pressure feedwater heater 35 are provided on this main feedwater pipe 33.

Therefore, the steam generated as a result of the heat exchange with the high-pressure and high-temperature primary cooling water in the steam generator 13 is transferred to the steam turbine 17 (from the high-pressure turbine 19 to the low-pressure turbine 20) via the main steam pipe 18, and this steam drives the steam turbine 17 to allow the electric generator 21 to generate electrical power. At this time, after the steam from the steam generator 13 drives the high-pressure turbine 19, the moisture separator heater 22 reduces moisture contained in the steam and heats the steam, and the heated steam drives the low-pressure turbine 20. The condenser 26 cools and condenses the steam that has driven the steam turbine 17 into steam condensate. The low-pressure feedwater heater 32 heats the steam condensate by the use of the low-pressure steam extracted from, for example, the low-pressure turbine 20, and the deaerator 30 reduces impurities such as dissolved oxygen and non-condensable gas (ammonia gas) from the steam. The high-pressure feedwater heater 35 heats the impurity-reduced steam by the use of the high-pressure steam extracted from, for example, the high-pressure turbine 19. Thereafter, the heated steam is returned to the steam generator 13.

As shown in FIG. 1, in the reactor cooling system configured as described above and applied to a nuclear power plant, a component cooling system A that circulates the primary cooling water in reactor components and cools the components during a normal operation, and an emergency reactor cooling system B that circulates the primary cooling water in the reactor containment vessel 11 or the pressurized water reactor 12 and cools the reactor containment vessel 11 or the pressurized water reactor 12 in an emergency are provided independently. In this case, a first building 50 is placed to surround an outer circumference of the reactor containment vessel 11, and a second building 40 is placed to be adjacent to this first building 50. The reactor components include not only the cooling water pump 15a described above but also pumps, heat exchangers and the like (not shown).

That is, a residual heat removal path 42 for circulating primary cooling water that flows in the cooling water pipes 14 and 15 (see FIG. 7) by the use of a pump 41 is provided in the first building 50. A residual heat removal heat exchanger (normal-operation cooling device) 43 is provided on this residual heat removal path 42. A secondary cooling-water (component cooling water) circulation path 44 and a pump 45 for circulating component cooling water in this residual heat removal heat exchanger 43 and cooling the primary cooling water are provided in the second building 40. Furthermore, a component cooling water heat exchanger (normal-shutdown cooling device) 46 is provided on the component cooling water circulation path 44, and a seawater once-through path 47 and a pump 48 for supplying seawater through this component cooling water heat exchanger 46 and to cool the component cooling water are provided.

On the other hand, plural sets (in the present embodiment, four sets) of the reactor cooling systems B are arranged in the first building 50. Each of these reactor cooling systems B includes a cooling-water circulation path (reactor cooling path) 51 for supplying primary cooling water to the reactor containment vessel 11 and the pressurized water reactor 12 and collecting and circulating this primary cooling water in an emergency, and a cooling device (emergency cooling device) 52 that air-cools the primary cooling water flowing in the cooling-water circulation path 51 at outside of the reactor containment vessel 11.

In the first embodiment, the reactor cooling systems B (the cooling-water circulation paths 51 and the cooling devices 52) constitute an emergency core cooling system (ECCS) and a reactor-containment-vessel spray system according to the present invention.

To specifically explain the reactor cooling systems B, as shown in FIG. 2, refueling water storage pits 61 are provided at positions below the pressurized water reactor 12 within the reactor containment vessel 11. A spray path 62 starting at one of these refueling water storage pits 61, passing through the inside of the external first building 50, returning again into the reactor containment vessel 11, and extending upward of the pressurized water reactor 12 is provided. A supply pump 63 and a motor-operated valve 64 are attached to an intermediate portion of this spray path 62, and a spray pipe 65 including many spray nozzles 65a is connected to a tip end portion of this spray path 62.

Therefore, when the supply pump 63 is driven, the primary cooling water stored in the refueling water storage pit 61 can be supplied to the spray pipe 65 along the spray path 62, the primary cooling water can be sprayed into the reactor containment vessel 11 by the use of the many spray nozzles 65a, and the inside of the reactor containment vessel 11 can be cooled.

Furthermore, a supply path 66 starting at the refueling water storage pit 61, passing through the inside of the external first building 50, returning again into the reactor containment vessel 11, and extending to the pressurized water reactor 12 is provided. A supply pump 67, a motor-operated valve 68, and check valves 69 and 70 are provided in an intermediate portion of this supply path 66, and a tip end portion of the supply path 66 is connected to a core barrel of the pressurized water reactor 12.

Therefore, when the supply pump 67 is driven, the primary cooling water stored in the refueling water storage pit 61 can be supplied to the core barrel of the pressurized water reactor 12 along the supply path 66, and the core of the pressurized water reactor 12 can be cooled.

Furthermore, a circulation path 71 starting at the refueling water storage pit 61, passing through the inside of the external first building 50, returning again into the reactor containment vessel 11, and extending to the refueling water storage pit 61 is provided. A supply pump 72 and a motor-operated valve 73 are attached to an intermediate portion of this circulation path 71. Further, an emergency letdown path 74 for extracting primary cooling water to the refueling water storage pit 61 is provided on the cooling water pipes 14 and 15 of the pressurized water reactor 12. A motor valve 75 is attached to an intermediate portion of this emergency letdown path 74.

Therefore, when the motor valve 75 is released, the primary cooling water flowing in the cooling water pipes 14 and 15 can be extracted to the refueling water storage pit 61 along the emergency extracting path 74. At this time, when the supply pump 72 is driven, the primary cooling water stored in the refueling water storage pit 61 can be returned again into the refueling water storage pit 61 along the circulation path 71.

Furthermore, a collection path for collecting the primary cooling water supplied to the spray pipe 65 along the spray path 62 and sprayed into the reactor containment vessel 11 from the many injection nozzles 65 and the primary cooling water supplied to the core barrel of the pressurized water reactor 12 along the supply path 66 and leaked out to the reactor containment vessel 11 in the refueling water storage pit 61 is provided. Although not shown, this collection path has a floor surface that causes the primary cooling water gathered within the reactor containment vessel 11 to flow in the refueling water storage pit 61.

In the first embodiment, the spray path 62, the supply path 66, the circulation path 71, and the collection path constitute each of the cooling-water circulation paths 51.

An external path 53 entering from within the reactor containment vessel 11 into the first building 51 and returning to the reactor containment vessel 11 is set in this cooling-water circulation path 51 (the spray path 62, the supply path 66, and the circulation path 71), and the cooling device 52 is provided for this external path 53.

That is, as shown in FIG. 3, in the first building 50, a first duct 81 is formed along a horizontal direction and a lower suction port (building-lower-portion suction port) 82 is formed on one end of the first duct 81 in a longitudinal direction. Furthermore, in the first building 50, a second duct 83 is formed along a vertical direction and an upper discharge port (building-upper-portion discharge port) 84 is formed on one end (an upper end) of the second duct 83 in the longitudinal direction. The other end of the first duct 81 communicates with the other end (a lower end) of the second duct 83 substantially orthogonally, and the cooling device 52 is arranged in a communicating portion in which the other ends of the first duct 81 and the second duct 83 communicate with each other. Moreover, in the first building 50, a third duct 85 extending downward from the communicating portion between the first duct 81 and the second duct 83, bending upward, and communicating with the second duct 83 upward of the cooling device 52 is formed.

In the first embodiment, the first duct 81, the second duct 83, and the third duct 85 constitute a duct of the present invention.

Furthermore, as shown in FIGS. 4 to 6, in the cooling device 52, inlet headers 91a, 91b, 91c, and 91d and outlet headers 92a, 92b, 92c, and 92d are provided at a predetermined interval, these headers are arranged so as to form four quadrangles, and plural fine tubes 93a, 93b, 93c, and 93d connect the inlet headers 91a, 91b, 91c, and 91d to the outlet headers 92a, 92b, 92c, and 92d opposing to one another, respectively.

In this case, the inlet headers 91a, 91b, 91c, and 91d and the outlet headers 92a, 92b, 92c, and 92d are hollow in shape and communicate with one another by the fine tubes 93a, 93b, 93c, and 93d, respectively. These fine tubes 93a, 93b, 93c, and 93d are provided in parallel in the horizontal direction and provided in a staggered fashion in the vertical direction. Furthermore, inlets 94a, 94b, 94c, and 94d and outlets 95a, 95b, 95c, and 95d connected to the cooling-water circulation paths 51 (the spray paths 62, the supply paths 66, and the circulation paths 71) are provided in the inlet headers 91a, 91b, 91c, and 91d, and the outlet headers 92a, 92b, 92c, and 92d, respectively.

Further, in a space 96 surrounded by the inlet headers 91a, 91b, 91c, and 91d, the outlet headers 92a, 92b, 92c, and 92d., and the fine tubes 93a, 93b, 93c, and 93d, four stays 97 extending from the inlet headers 91a, 91b, 91c, and 91d and the outlet headers 92a, 92b, 92c, and 92d support an electric motor 98, and fans 99 and 100 that blow air in the space 96 upward and downward are fixedly connected to drive shafts extending upward and downward of this electric motor 98, respectively. Quadrangular guides 102 and 103 are fixed to upper ends and lower ends of the inlet headers 91a, 91b, 91c, and 91d and the outlet headers 92a, 92b, 92c, and 92d, respectively.

As shown in FIG. 3, the cooling device 52 configured as described above is arranged in the communicating portion of the first duct 81, the second duct 83, and the third duct 85, whereby the first duct 81 (the lower suction port 82) communicates with the outer side of the fine tubes 93 (93a, 93b, 93c, and 93d). Moreover, the second duct 83 (the upper discharge port 84) communicates with upward of the space 96 surrounded by the inlet header 91 (91a, 91b, 91c, or 91d), the outlet header 92 (92a, 92b, 92c, or 92d), and the plural fine tubes 93, and the third duct 85 communicates with downward of this space 96. The fine tubes 93 on the cooling-water circulation path 51 are arranged to cross the first duct 81.

Therefore, when the electric motor 98 drives the two fans 99 and 100 to rotate in opposite directions, an upward current, that is, a current near the second duct 83 and a downward current, that is, a current near the third duct 85 are generated from the space 96. A suction force from the space 96 then acts on the first duct 81, air outside of the first building 50 is sucked into the first duct 81 from the lower suction port 82, and the air flows through the space 96 via gaps among the fine tubes 93. At this time, heat is exchanged between the air and the primary cooling water that flows in the fine tubes 93, and the primary cooling water can be cooled. The air that becomes hot after eliminating heat from the primary cooling water flows upward and downward, passes through the second duct 83 and the third duct 85, and is discharged outside from the upper discharge port 84.

Actuation of the component cooling system A and that of the reactor cooling systems B in the reactor facility according to the first embodiment described above are explained below in detail.

As shown in FIG. 1, during a normal operation of the reactor facility, the component cooling system A is used. That is, during a normal reactor shutdown, the pump 41 is driven to supply the primary cooling water in the cooling water pipes 14 and 15 to the residual heat removal heat exchanger 43 along the residual heat removal path 42 and to cool the primary cooling water. At this time, the pump 45 is driven to supply component cooling water to the residual heat removal heat exchanger 43 along the component cooling water circulation path 44, thereby cooling the primary cooling water circulating in the residual heat removal path 42. Furthermore, the pump 48 is driven to supply the seawater to the component cooling water heat exchanger 46 along the seawater once-through path 47, thereby cooling the component cooling water circulating in the component cooling water circulation path 44.

On the other hand, as shown in FIG. 2, during an emergency operation of the reactor facility, the reactor cooling systems B are used. That is, during a large break LOCA (Loss of Coolant Accident), the supply pump 63 is driven, the primary cooling water stored in the refueling water storage pit 61 is supplied to the spray pipe 65 along the spray path 62, and the primary cooling water is sprayed into the reactor containment vessel 11 from the many injection nozzles 65a attached to this spray pipe 65. This means that the primary cooling water is sprayed to a large amount of steam generated within the reactor containment vessel 11. In this case, after eliminating a huge amount of energy to cool the inside of the reactor containment vessel 11, the steam becomes hot, and the hot steam is dropped and returned into the refueling water storage pit 61 along the collection path. Accordingly, the sprayed primary cooling water can eliminate the energy emitted into the reactor containment vessel 11 and it is possible to keep integrity of the reactor containment vessel 11.

Meanwhile, during a LOCA, the supply pump 67 is driven, and the primary cooling water stored in the refueling water storage pit 61 is supplied to the core barrel of the pressurized water reactor 12 along the supply path 66. This primary cooling water then eliminates decay heat of the core generated in the pressurized water reactor 12 and cools the inside of the pressurized water reactor 12, the primary cooling water becomes hot, the hot primary cooling water flows outside and is returned into the refueling water storage pit 61 along the collection path. Accordingly, the supplied primary cooling water eliminates the decay heat of the pressurized water reactor 12, and it is possible to keep cooling the fuel within the pressurized water reactor 12.

Furthermore, during an emergency operation of the reactor facility, that is, during a large break LOCA or a small break LOCA, the cooling devices 52 cool the primary cooling water that becomes hot after cooling the reactor containment vessel 11 or the pressurized water reactor 12. That is, when flowing on the spray path 62 or the supply path 66, the primary cooling water that becomes hot after cooling the reactor containment vessel 11 or the pressurized water reactor 12 is continuously air-cooled by the cooling devices 52.

As shown in FIGS. 3 and 4, when flowing on the spray path 62 or the supply path 66, the primary cooling water taken in from the refueling water storage pit 61 exits the reactor containment vessel 11, enters the building 50, and reaches each of the cooling devices 52. In the cooling device 52, the primary cooling water enters the inlet header 91 (91a, 91b, 91c, or 91d) and flows to the outlet header 92 (92a, 92b, 92c, or 92d) via the many fine tubes 93 (93a, 93b, 93c, or 93d). At this time, because of the rotation of the fans 99 and 100, air outside of the building 50 is sucked into the first duct 81 from the lower suction port 82, passes through the gaps among the fine tubes 93, and flows in the space 96. At this time, heat exchange is made between the air and the primary cooling water flowing in the fine tubes 93 and the primary cooling water is cooled. Thereafter, the air that becomes hot after eliminating the heat from the primary cooling water flows upward and downward from the space 96, passes through the second duct 83 and the third duct 95, and is discharged outside from the upper discharge port 84. Accordingly, the primary cooling water that becomes hot after cooling the reactor containment vessel 11 or the pressurized water reactor 12 is continuously air-cooled by the cooling devices 52, and it is possible to appropriately cool the reactor containment vessel 11 and the pressurized water reactor 12.

As shown in FIG. 2, if the pressurized water reactor 12 is to be shut down, the motor valve 75 is released and the primary cooling water flowing in the cooling water pipes 14 and 15 is extracted to the refueling water storage pit 61 along the emergency letdown path 74. At this time, the supply pump 72 is driven to return the primary cooling water stored in the refueling water storage pit 61 to the refueling water storage pit 61 along the circulation path 71. At this time, similarly to the above case, when the primary cooling water flows from the refueling water storage pit 61 along the circulation path, the primary cooling water that becomes hot after cooling the pressurized water reactor 12 is continuously air-cooled by the cooling devices 52 because each of the cooling devices 52 is provided on the circulation path 71.

In this manner, the emergency core cooling system according to the first embodiment, in which the pressurized water reactor 12 is configured to be arranged in the reactor containment vessel 11, includes the cooling-water circulation path 51 that supplies primary cooling water to the reactor containment vessel 11 or the pressurized water reactor 12 and collects and circulates the primary cooling water in an emergency, and the cooling device 52 that air-cools the primary cooling water flowing in the cooling-water circulation path 51 at outside of the reactor containment vessel 11.

Therefore, the cooling device 52 that cools the primary cooling water supplied to the reactor containment vessel 11 or the pressurized water reactor 12 is provided outside of the reactor containment vessel 11 and configured as an air-cooling type, whereby it is possible to realize downsizing and cost reduction of the system and improve the safety and reliability thereof.

In the emergency core cooling system according to the first embodiment, the first building 50 is placed outside of the reactor containment vessel 11, the cooling-water circulation path 51 includes the external path 53 entering into the first building 50 from within the reactor containment vessel 11 and returning again into the reactor containment vessel 11, and the cooling device 52 air-cools the primary cooling water flowing in this external path 53. Therefore, the cooling device 52 air-cools the primary cooling water flowing in the cooling-water circulation path 51 at outside of the reactor containment vessel 11, thereby making it possible to efficiently cool the primary cooling water.

In the emergency core cooling system according to the first embodiment, plural sets of the cooling-water circulation paths 51 and the cooling devices 52 are arranged within the first building 50. Therefore, when one of the cooling-water circulation paths 51 or the cooling devices 52 breaks down or is in a maintenance operation, the other cooling-water circulation paths 51 and cooling devices 52 can be actuated, thereby making it possible to improve the safety of the system.

In the emergency core cooling system according to the first embodiment, the spray path 62 that sprays the primary cooling water stored in the refueling water storage pit 61 provided within the reactor containment vessel 11 into the reactor containment vessel 11, the supply path 66 that supplies the primary cooling water stored in the refueling water storage pit 61 into the pressurized water reactor 12, and the collection path that collects the primary cooling water sprayed into the reactor containment vessel 11 and the primary cooling water supplied into the pressurized water reactor 12 in the refueling water storage pit 61 are provided as each of the cooling-water circulation paths 51. Therefore, it is possible to select the spray of the primary cooling water into the reactor containment vessel 11, the supply of the primary cooling water into the pressurized water reactor 12, or both the spray and the supply of the primary cooling water, depending on a state of an accident that occurs to the reactor facility. Accordingly, it is possible to improve the safety of the system.

In the emergency core cooling system according to the first embodiment, the ducts 81, 83, and 85 extending into the first building 50 along the vertical direction and including the lower suction port 82 and the upper discharge port 84 are provided, and each of the cooling devices 52 is provided in a connecting portion in which the ducts 81, 83, and 85 are connected to one another. Therefore, air flowing from the lower suction port 82 in the first duct 81 is supplied toward the cooling device 52, and the air that becomes hot after being subjected to heat exchange with the cooling water in the cooling device 52 is discharged outside from the upper discharge port 84. Accordingly, it is possible to efficiently cool the primary cooling water by the use of air.

In the emergency core cooling system according to the first embodiment, the plural fine tubes 93 that branch from the cooling-water circulation path 51 and that are arranged to cross the inside of the ducts 81, 83, and 85 are provided as each of the cooling devices 52. Therefore, air sucked from the lower suction port 82 into the ducts 81, 83, and 85 is supplied toward the fine tubes 93, heat exchange is made between the air and the primary cooling water flowing in the fine tubes 93 in the fine tubes 93, and the air that becomes hot is discharged outside from the upper discharge port 84. Accordingly, it is possible to efficiently cool the primary cooling water by the use of air.

In the emergency core cooling system according to the first embodiment, the inlet header 91 that primary cooling water enters from the cooling-water circulation path 51, the outlet header 92 that ejects the primary cooling water to the cooling-water circulation path 51, and the plural fine tubes 93 that connect the inlet header 91 to the outlet header 92 so as to form the headers 91 and 92 into a ring shape are provided as each cooling device 52. The lower suction port 82 of the ducts 81, 83, and 85 communicates with the fine tubes 93, and the upper discharge port 84 of the ducts 81, 83, and 85 communicates with the space 96 surrounded by the inlet header 91, the outlet header 92, and the fine tubes 93. Therefore, air is supplied to the fine tubes 93 formed into the ring shape from outside of the fine tubes 93, and the air of the internal space 96 that has been subjected to the heat exchange is discharged upward. The heat exchange efficiency is improved by efficiently arranging the fine tubes 93, thereby making it possible to downsize the cooling device 52.

In the emergency core cooling system according to the first embodiment, the fans 99 and 100 that blow upward or downward the air in the space 96 surrounded by the inlet header 91, the outlet header 92, and the fine tubes 93. Therefore, an air current generated by driving the fans 99 and 100 discharges the air that has been subjected to the heat exchange with the primary cooling water flowing in the fine tubes 93 upward or downward from the internal space, thereby making it possible to improve the heat exchange efficiency.

The reactor facility according to the first embodiment includes the reactor containment vessel 11, the pressurized water reactor 12 arranged within the reactor containment vessel 11, the reactor component (the reactor coolant pump 15a), the residual heat removal path 42 that circulates and cools the primary cooling water during a normal operation, the component cooling system A that circulates component cooling water in the reactor components and cools the reactor components during a normal operation, the normal-operation cooling device (the component cooling water heat exchanger 46) that cools the component cooling water flowing in the component cooling system A outside of the reactor containment vessel 11, the reactor cooling systems B (the cooling-water circulation paths 51) that circulate the primary cooling water in the reactor containment vessel 11 or the pressurized water reactor 12 and cool the reactor containment vessel 11 or the pressurized water reactor 12 in an emergency, and the emergency cooling devices (the cooling devices 52) that air-cool the primary cooling water flowing in the respective reactor cooling systems B at outside of the reactor containment vessel 11.

Therefore, it is possible to improve the safety and reliability of the system by separately providing the normal-operation cooling system (the component cooling system A) and the emergency cooling systems (the reactor cooling systems B). It is also possible to realize the downsizing and cost reduction of the system by using the air-cooling systems as the emergency core cooling systems.

Furthermore, in the reactor facility according to the first embodiment, the emergency letdown path 74 that extracts primary cooling water in the cooling water pipes 14 and 15 to the refueling water storage pit 61 and the circulation path 71 that circulates the primary cooling water stored in the refueling water storage pit 61 via the cooling devices 52 are provided in addition to the normal-operation cooling system (the component cooling system A). Therefore, by providing two types of cooling systems that can be used during the shutdown of the reactor, the cooling system can be diversified without degrading its economic efficiency and high reliability of the system can be ensured.

### Second embodiment

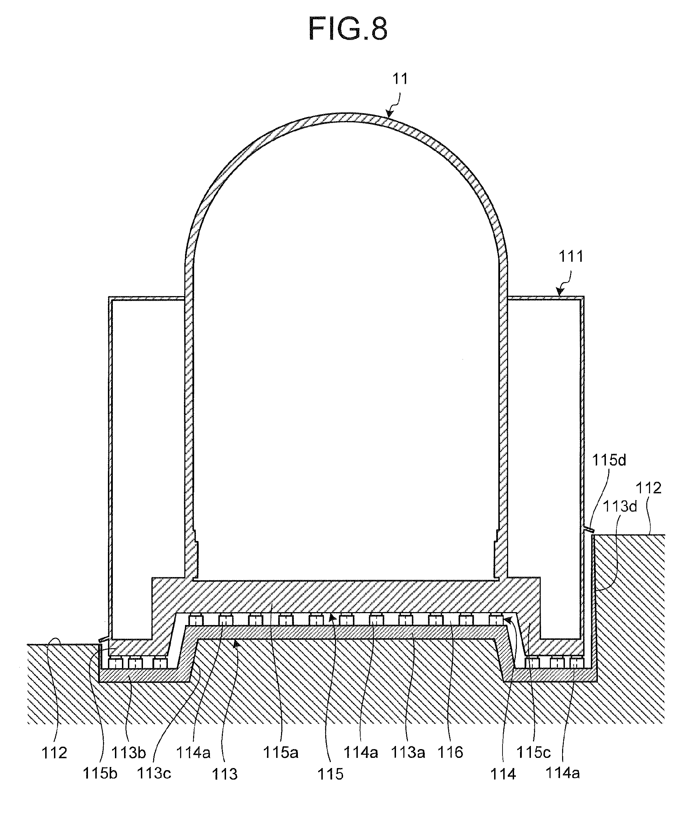

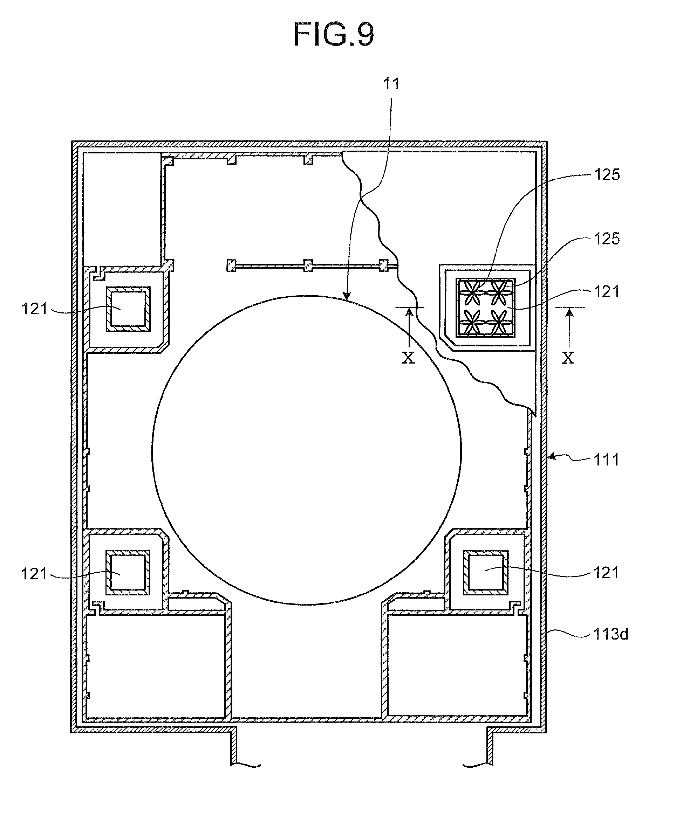

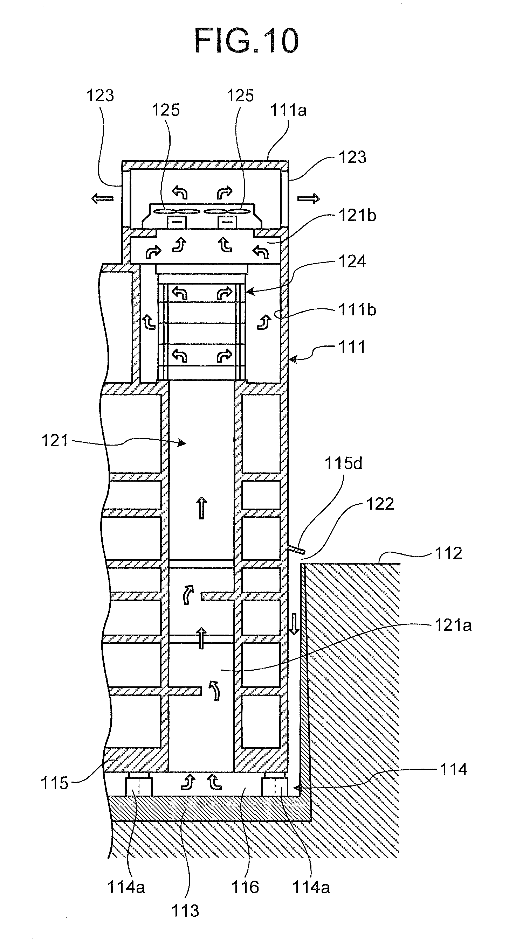

FIG. 8 is a schematic configuration diagram of a reactor facility including an emergency core cooling system according to a second embodiment of the present invention. FIG. 9 is a partial cutaway schematic plan view of the reactor facility according to the second embodiment. FIG. 10 is a cross-sectional view taken along X-X of FIG. 9, representing a duct in which a cooling device is arranged. Elements having functions identical to those explained in the above embodiment are denoted by like reference signs and redundant explanations thereof will be omitted.

A reactor according to the second embodiment is a pressurized water reactor similar to that of the first embodiment. Therefore, explanations of a reactor containment vessel and an internal configuration thereof will be omitted. Furthermore, similarly to the first embodiment, a reactor cooling system according to the present embodiment independently includes an component cooling system that circulates primary cooling water in the components and cools the components during a normal operation, and an emergency reactor cooling system that circulates the primary cooling water in the reactor containment vessel or the reactor and cools the reactor containment vessel or the reactor during an emergency. Therefore, explanations of these aspects will be also omitted.

As shown in FIGS. 8 and 9, in the second embodiment, a first building 111 is placed to surround the outer circumference of the reactor containment vessel 11 of a hollow cylindrical shape, and this first building 111 is rectangular in a plan view. A lower base plate 113 is placed on a ground 112, an upper base plate 115 is arranged on this lower base plate 113 via a seismic isolator 114, and the reactor containment vessel 11 and the first building 111 are placed on this upper base plate 115.

The lower base plate 113 includes a central base portion 113a corresponding to a lower portion of the reactor containment vessel 11, and an outer-peripheral base portion 113b present on an outer periphery of this central base portion 113a and corresponding to a lower portion of the first building 111. The central base portion 113a is generally circular, and the outer-peripheral base portion 113b is rectangular and located downward of the central base portion 113a via a bent portion 113c.

Similarly to the lower base plate 113, the upper base plate 115 includes a central base portion 115a on which the lower portion of the reactor containment vessel 11 is placed, and an outer-peripheral base portion 115b that is present on an outer periphery of this central base portion 115a and on which the lower portion of the first building 111 is placed. The central base portion 115a is generally circular, and the outer-peripheral base portion 115b is rectangular and located downward of the central base portion 115a via a bent portion 115c.

The lower base plate 113 and the upper base plate 115 are level and arranged in parallel to each other. A space 116 is provided between the lower base plate 113 and the upper base plate 115, and the seismic isolator 114 is interposed in this space 116. For example, this seismic isolator 114 is configured such that lead-containing laminated rubbers 114a are arranged at a substantially uniform interval. Configurations of the lower base plate 113, the seismic isolator 114, and the upper base plate 115 are not limited to the configurations described above, and the lower base plate 113, the seismic isolator 114, and the upper base plate 115 can be configured by using simple horizontal members.

Furthermore, a longitudinal wall portion 113d is built upright on the outer periphery of the lower base plate 113 so as to surround the first building 111 and the upper base plate 115 with a predetermined gap given between the longitudinal wall portion 113d and the first building 111 and the upper base plate 115, respectively. In this case, a height position of the longitudinal wall portion 113d is substantially identical to that of a ground level of the ground 112. In the present embodiment, right and left heights of this longitudinal wall portion 113d are different because right and left heights of the ground level of the ground 112 are different. Meanwhile, a flange 115d proximate to an upper end and an inner peripheral surface of the longitudinal wall portion 113d of the lower base plate 113 is provided on an outer circumferential surface of the first building 111 or an outer peripheral surface of the upper base plate 115. This flange 115d is located above the gap between the longitudinal wall portion 113d of the lower base plate 113 and the first building 111 or the upper base plate 115, and functions to protect rainwater from entering this gap.

Further, a plurality of ducts 121 are provided in outer circumferential portions of the first building 111 equidistantly in a circumferential direction. In the present embodiment, the ducts 121 are provided in four corners of the first building 111, respectively because the first building 111 is rectangular in the plan view. That is, in the first building 111, the ducts 121 are formed along a vertical direction and lower ends of the ducts 121 communicate with the space 116 that is present between the lower base plate 113 and the upper base plate 115 and that accommodates the seismic isolator 114. This space 116 is communicable with the outside via the gap between the longitudinal wall portion 113d of the lower base plate 113 and the first building 111 and that between the longitudinal wall portion 113d and the upper base plate 115. That is, a space between a tip end of the longitudinal wall portion 113d of the lower base plate 113 and the flange 115d of the upper base plate 115 serves as a lower suction port (building-lower-portion suction port) 122. This lower suction port 122 is provided entirely on the outer circumference of the first building 111.

As shown specifically in FIG. 10, an upper end of each of the ducts 121 communicates with a plurality of upper discharge ports (building-upper-portion discharge ports) 123 provided on a roof portion 111a of the first building 111. The upper discharge ports 123 are formed in four portions lateral of the roof portion 111a, respectively. A widened portion 111b is formed in an upper portion of the duct 121, that is, at a position close to the roof portion 111a, and a cooling device 124 is arranged in this widened portion 111b. Similarly to the cooling device 52 according to the first embodiment (see FIGS. 4 to 8), this cooling device 124 is configured to include an inlet header, an outlet header, and a plurality of fine tubes connecting the inlet header to the outlet header. In this case, the cooling-water circulation path 51 (see FIG. 2) is connected to the inlet header and the outlet header. A plurality of (in the present embodiment, four) fans 125 are provided to be located upward of the cooling device 124 and downward of the roof portion 111a.

In each of the ducts 121 of the first building 111 configured as described above, a lower end of a first duct 121a communicates with the lower suction port 122 via the space 116, and an upper end of the first duct 121a communicates with the inside of the cooling device 124, that is, a space surrounded by the inlet header, the outlet header, and the plural fine tubes. Further, a lower end of a second duct 121b communicates with an exterior of the cooling device 124, that is, a space outside of the inlet header, the outlet header, and the fine tubes, and an upper end of the second duct 121b communicates with the upper discharge ports 123 via the fans 125. In this case, in the cooling device 124, the space surrounded by the inlet header, the outlet header, and the fine tubes is open downward but closed upward.

Therefore, when an electric motor (not shown) drives the fans 125 to rotate, an upward current is generated in the second duct 121b, and a suction force flowing from the internal space to the outside via the fine tubes acts in the cooling device 124. This suction force acts on the lower suction port 122 via the first duct 121a, the space 116, and the gap between the first building 111 and the longitudinal wall portion 113d. Air outside of the first building 111 is then sucked from the lower suction port 122 into the space 116 and introduced into the cooling device 124 via the first duct 121a. In this cooling device 124, when the external air passes through the gaps among the fine tubes, heat exchange is made between the air and the primary cooling water flowing in the fine tubes and the primary cooling water is cooled. The air that becomes hot after eliminating the heat from the primary cooling water flows from the outside of the cooling device 124 into the second duct 121b and is discharged outside from the upper discharge ports 123.

Such actuation is performed during an emergency operation of the reactor facility. That is, during a large break LOCA or a small break LOCA of the reactor facility, the cooling device 124 cools the primary cooling water that becomes hot after cooling the reactor containment vessel 11 or the pressurized water reactor 12. That is, when flowing in the cooling-water circulation path 51, the primary cooling water that becomes hot after cooling the reactor containment vessel 11 or the pressurized water reactor 12 is continuously air-cooled by the cooling device 124.

In this manner, in an emergency core cooling system according to the second embodiment, the ducts 121 extending into the first building 111 along the vertical direction and each including the lower suction port 122 and the upper discharge ports 123 are provided, and the cooling device 124 is provided in each of the ducts 121. Therefore, air flowing in each of the ducts 121 is supplied from the lower suction port 122 toward the cooling device 124, heat exchange is made between the air and the cooling water in the cooling device 124, and the air that becomes hot is discharged outside from the upper discharge ports 123 of the first building 111. Accordingly, it is possible to efficiently apply a chimney effect to the emergency core cooling system and improve the cooling efficiency with which the air cools the cooling water.

In the emergency core cooling system according to the second embodiment, the fans 125 that blow air that is sucked from the lower suction port 122, that rises in each of the ducts 121, and that has cooled the cooling water flowing in the fine tubes of the cooling device 124 toward the upper discharge ports 123 are provided. Therefore, an air current generated by driving the fans 125 discharges upward the air that has been subjected to the heat exchange with the primary cooling water, thereby making it possible to improve the heat exchange efficiency of the system.

In the emergency core cooling system according to the second embodiment, the lower base plate 113 is placed on the ground 112, the upper base plate 115 is provided on the lower base plate 113 via the seismic isolator 114, the reactor containment vessel 11 and the first building 111 are placed on the upper base plate 115, and the lower suction port 122 provided near a ground surface communicates with each of the ducts 121 via the space 116 in which the seismic isolator 114 is arranged. Therefore, air near the ground surface is introduced into the space 116 from the lower suction port 122 and supplied from the space 116 via each of the ducts 121. It is thereby possible to supply lower-temperature air to the cooling device 124 via the space 116 and improve the cooling efficiency of the system. That is, by arranging the lower suction port 122 and the upper discharge ports 123 to be away from each other at a predetermined distance, it is possible to prevent high-temperature air discharged from the upper discharge ports 123 from being sucked from the lower suction port 122.

In this case, external air flows to the cooling device 124 via a bent path (the gap between the longitudinal wall portion 113d and the first building 111, and the space 116) from the lower suction port 122 to each of the ducts 121, and the air that has been subjected to the heat exchange in the cooling device 124 flows to the upper discharge ports 123 via a bent path (the roof portion 111a). The cooling device 124 that cools radioactive primary cooling water is thereby not directly exposed to the outside of the first building 111 and can improve shielding characteristics. Further, by shielding each of the ducts 121 and the cooling devices 124 from the outside, it is possible to protect the ducts 121 and the cooling devices 124 from external missiles and the like.

In the emergency core cooling system according to the second embodiment, the lower suction port 122 is provided between the flange 115d of the upper base plate 115 and the first building 111 and the longitudinal wall portion 113d of the lower base plate 113. Therefore, additional suction is not needed in the first building 111 and the configuration of the emergency core cooling system is simplified.

In the emergency core cooling system according to the second embodiment, the first building 111 is placed to surround the reactor containment vessel 11, and the ducts 121 are distributed in the outer circumferential portions of the first building 111 equidistantly in the circumferential direction, that is, provided in the four corners of the first building 111, respectively. Therefore, a plurality of the cooling devices 124 and a plurality of ducts 121 are provided while being physically separated from one another in the circumferential direction. By doing so, even if a part of the cooling devices 124 or the ducts 121 is damaged or broken down, primary cooling water can be appropriately cooled and the safety of the system can be sufficiently ensured by using the remaining cooling devices 124 and ducts 121.

In each of the above embodiments, the cooling devices 52 or 124 are configured by arranging the four inlet headers 91 and the four outlet headers 92 into the four quadrangles, respectively and connecting the inlet headers 91 to the outlet headers 92 by the fine tubes 93. However, the shape of each of the cooling devices 52 or 124 is not limited to this shape. The shape of the cooling device 52 is not limited to the quadrangular shape but can be a triangular shape, a hexagonal shape, or a circular shape by bending fine tubes, for example.

Furthermore, in each of the above embodiments, the emergency core cooling system and the reactor facility according to the present invention have been explained while being applied to a pressurized water reactor (PWR). Alternatively, the emergency core cooling system and the reactor facility according to the present invention can be also applied to a boiling water reactor (BWR). In this case, it suffices that a cooling-water circulation path includes a path for supplying cooling water stored in a suppression pool provided below a reactor containment vessel into a reactor and a path for collecting this cooling water, that a supply path is guided to outside of the reactor containment vessel, and that a cooling device that air-cools cooling water flowing in this path is provided.

### INDUSTRIAL APPLICABILITY

By providing a cooling device that air-cools cooling water to be supplied to a reactor containment vessel or a reactor in an emergency, the emergency core cooling system and the reactor facility according to the present invention can realize downsizing and cost reduction of the system and improve safety and reliability thereof, and the emergency core cooling system and the reactor facility can be applied to any type of reactors.

### REFERENCE SIGNS LIST

- 11: reactor containment vessel
- 12: pressurized water reactor
- 13: steam generator
- 14, 15: cooling water pipe
- 15a: reactor coolant pump (component)
- 40: second building
- 42: residual heat removal path
- 43: residual heat removal heat exchanger (normal-operation cooling device)
- 46: component cooling water heat exchanger (normal-shutdown cooling device)
- 50, 111: first building
- 51: cooling-water circulation path (reactor cooling path)
- 52, 124: cooling device (emergency cooling device)
- 53: external path
- 61: refueling water storage pit
- 62: spray path
- 66: supply path
- 71: circulation path
- 81, 121a: first duct
- 82, 122: lower suction port (building-lower-portion suction port)
- 83, 121b: second duct
- 84, 123: upper discharge port (building-upper-portion discharge port)
- 85: third duct
- 99, 100, 125: fan
- 111a: roof portion
- 111b: widened portion
- 112: ground
- 113: lower base plate
- 113a: central base portion
- 113b: outer-peripheral base portion
- 113c: bent portion
- 113d: longitudinal wall portion
- 114: seismic isolator
- 114a: lead-containing laminated rubber
- 115: upper base plate
- 115a: central base portion
- 115b: outer-peripheral base portion
- 115c: bent portion
- 115d: flange
- 116: space
- 121: duct
- A: component cooling system (component cooling path)
- B: reactor cooling system (reactor cooling path)

## Claims

1. An emergency core cooling system in a reactor facility having a reactor arranged within a reactor containment vessel, the emergency core cooling system comprising:
a cooling-water circulation path that supplies cooling water to the reactor containment vessel or the reactor and collects and circulates the cooling water in an emergency; and
a cooling device that air-cools cooling water flowing in the cooling-water circulation path at outside of the reactor containment vessel.

2. The emergency core cooling system according to claim 1, wherein a building is placed outside of the reactor containment vessel, the cooling-water circulation path includes an external path entering into the building from within the reactor containment vessel and returning again into the reactor containment vessel, and the cooling device air-cools cooling water flowing in the external path.

3. The emergency core cooling system according to claim 2, wherein plural sets of the cooling-water circulation paths and the cooling devices are arranged within the building.

4. The emergency core cooling system according to any one of claims 1 to 3, wherein the cooling-water circulation path includes a spray path that sprays cooling water stored in a refueling water storage pit provided within the reactor containment vessel into the reactor containment vessel, a supply path that supplies the cooling water stored in the refueling water storage pit into the reactor, and a collection path that collects cooling water sprayed into the reactor containment vessel and cooling water supplied into the reactor in the refueling water storage pit.

5. The emergency core cooling system according to any one of claims 2 to 4, wherein a duct that extends into the building along a vertical direction and that includes a building-lower-portion suction port and a building-upper-portion discharge port is provided, and the cooling device is provided in the duct.

6. The emergency core cooling system according to claim 5, wherein the cooling device includes a plurality of fine tubes that branch from the cooling-water circulation path and that are arranged to cross inside of the duct.

7. The emergency core cooling system according to claim 5 or 6, wherein
the cooling device includes an inlet header where cooling water enters from the cooling-water circulation path, an outlet header that ejects cooling water to the cooling-water circulation path, and a plurality of the fine tubes that connect the inlet header to the outlet header so as to form the headers into a ring shape,
the building-lower-portion suction port communicates with one of a space surrounded by the inlet header, the outlet header, and the fine tubes and a space outside of the fine tubes, and
a discharge port of the duct provided in an upper portion of the building communicates with the space other than the space with which the building-lower-portion suction port communicates.

8. The emergency core cooling system according to any one of claims 5 to 7, wherein a fan that blows air that is sucked from the building-lower-portion suction port, that rises in the duct, and that has cooled cooling water flowing in the fine tubes toward the building-upper-portion discharge port is provided.

9. The emergency core cooling system according to any one of claims 5 to 8, wherein a lower base plate is placed on a ground, an upper base plate is arranged on the lower base plate via a seismic isolator, the reactor containment vessel and the building are placed on the upper base plate, and the building-lower-portion suction port provided near a ground surface communicates with the duct via a space in which the seismic isolator is arranged.

10. The emergency core cooling system according to claim 9, wherein the building-lower-portion suction port is provided between the upper base plate and the lower base plate or between the building and the lower base plate.

11. The emergency core cooling system according to any one of claims 5 to 10, wherein the building is placed to surround the reactor containment vessel, and a plurality of the ducts are provided in outer circumferential portions of the building to be distributed equidistantly in a circumferential direction.

12. A reactor facility comprising:
a reactor containment vessel;
a reactor arranged within the reactor containment vessel;
reactor components;
an component cooling path that circulates cooling water in the component and cools the component during a normal operation;
a cooling device that water-cools cooling water flowing in the component cooling path outside of the reactor containment vessel during normal operation;
a reactor cooling path that circulates primary cooling water in the reactor containment vessel or the reactor and cools the reactor containment vessel or the reactor in an emergency; and
an emergency cooling device that air-cools primary cooling water flowing in the reactor cooling path at outside of the reactor containment vessel.
